# EUROPÄISCHE PATENTSCHRIFT

(11) **EP 2 338 814 B1**
(45) Veröffentlichungstag und Bekanntmachung des Hinweises auf die Patenterteilung: **25.06.2014**
(21) Anmeldenummer: 10015144.8
(22) Anmeldetag: 30.11.2010
(51) Int. Cl.: B65G 47/90, B65G 47/91

(54) **Verfahren zum Betreiben eines Roboters und Vorrichtung mit einem Roboter**
Method for operating a robot and device with a robot
Procédé de fonctionnement d'un robot et dispositif doté d'un robot

(30) Priorität: 22.12.2009 DE 102009060063
(43) Veröffentlichungstag der Anmeldung: 29.06.2011
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A2- 0 045 512
- WO-A1-2009/026925
- JP-A- H05 110 292
- JP-A- H08 276 391
- JP-A- 2004 119 488
- US-A- 5 344 202
- US-A1- 2004 139 989

## Beschreibung

Die vorliegende Erfindung betrifft ein Verfahren zum Betreiben eines Roboters, welcher eine Kinematik und einen mit der Kinematik gekoppelten Endeffektor zum Umsetzen von Lebensmittelprodukten umfasst. Ferner betrifft die Erfindung eine Vorrichtung mit einem solchen Roboter.

Roboter der genannten Art kommen beispielsweise in der Lebensmittelindustrie zum Einsatz, um Lebensmittelprodukte wie Fleisch, Wurst oder Käse von einem ersten Fördermittel auf ein zweites Fördermittel umzusetzen, zu sortieren oder in eine Verpackung einzubringen. Zu diesem Zweck wird der Endeffektor mittels der Kinematik relativ zu einer ortsfesten Basis bewegt. Bei dem Endeffektor kann es sich um ein beliebiges Werkzeug handeln, mittels welchem die entsprechenden Produkte aufgenommen, transportiert und abgesetzt werden können. Beispielsweise kann ein Produktgreifer vorgesehen sein, der zwei die Produkte untergreifende Schaufelblätter oder eine Vakuumsaugvorrichtung aufweist.

Durch den Kontakt des Endeffektors mit den Lebensmittelprodukten kann es zu Kontaminationen am Endeffektor kommen, welche in hygienischer Hinsicht problematisch sind. Beispielsweise können Produktreste am Endeffektor anhaften oder es kann sich ein feiner Film aus biologischem Material bilden. Eine entsprechende Reinigung durch einen Benutzer ist aufwändig und erfordert eine unerwünscht lange Unterbrechung des Roboterbetriebs.

Die US 2004/0139989 A1 offenbart eine Vorrichtung zum Anheben und Aussortieren von Eiern, welche in einer Förderanlage gefördert werden. Die Vorrichtung kann einen Satz von Vakuumgreifern umfassen, welche an einer verfahrbaren Plattform montiert sind und mittels eines pneumatischen Stößels auf und ab bewegt werden können.

Die EP 0 045 512 A2 offenbart einen Greifarm für einen Industrieroboter, welcher eine Pressluftzufuhr aufweist und mit Blasdüsen versehen ist. Die Blasdüsen dienen zum Entfernen von Spänen von einem zu ergreifenden Werkzeug oder von dem Roboter-Greifarm. Zum Reinigen eines zum Unsetzen von Lebensmittelprodukten ausgebildeten Endeffektors sind die Blasdüsen hingegen nicht geeignet.

Es ist eine Aufgabe der Erfindung, bei einem Roboter der gattungsgemäßen Art mit möglichst geringfügigen Eingriffen in den Betriebsablauf den hygienischen Gütegrad zu erhöhen.

Die Aufgabe wird durch ein Verfahren mit den Merkmalen des Anspruchs 1 gelöst.

Erfindungsgemäß wird der Endeffektor bei Erfüllung eines Reinigungskriteriums automatisch gereinigt. Das Reinigungskriterium kann in Abhängigkeit von der jeweiligen Anwendung sowie von den hygienischen Vorgaben festgelegt werden. Ist das Reinigungskriterium erfüllt, kann die Reinigung des Endeffektors beispielsweise durch eine Steuereinrichtung des Roboters oder durch eine externe Steuereinrichtung ausgelöst werden. Auf diese Weise ist die Erfüllung der hygienischen Vorgaben stets gewährleistet, insbesondere, ohne dass ein aktiver Eingriff eines Benutzers nötig ist.

Gemäß einer Ausführungsform wird der zu reinigende Endeffektor automatisch, insbesondere durch den Roboter selbst, in den Wirkbereich einer Reinigungseinrichtung bewegt und durch diese gereinigt. Bevorzugt wird der Endeffektor durch den Roboter direkt in die Reinigungseinrichtung eingebracht. Die Reinigungseinrichtung befindet sich hierzu vorteilhafterweise innerhalb eines Aktionsbereichs des Roboters und kann insbesondere einen Teil der Produktumsetzvorrichtung bilden. Alternativ könnte der Endeffektor durch den Roboter aber auch in eine Koppelstation gebracht werden, in welcher er von der Kinematik abgekoppelt und von wo aus er weiter in den Wirkbereich der Reinigungseinrichtung transportiert wird.

Gemäß einer weiteren Ausführungsform wird der zu reinigende Endeffektor vor seiner Reinigung von der Kinematik abgekoppelt. Ein abgekoppellter Endeffektor ist leicht und insbesondere von allen Seiten zuverlässig zu reinigen, während der Roboter während der Reinigung des Endeffektors für andere Zwecke zur Verfügung steht und nicht unbeweglich in einer Reinigungsstellung verharren muss.

Außerdem kann nach der Abkopplung des zu reinigenden Endeffektors ein sauberer Ersatzendeffektor an die Kinematik angekoppelt werden und das Umsetzen von Lebensmittelprodukten während der Reinigung fortgesetzt werden. Dies ist insofern vorteilhaft, als dann durch die Reinigung keine nennenswerte Unterbrechung des Produktumsetzbetriebs hervorgerufen wird und es hinsichtlich des Betriebs der zugehörigen Produktverarbeitungsanlage zu keiner wesentlichen Geschwindigkeits- oder Durchsatzeinbuße kommt. Gleichzeitig kann die Reinigung des Endeffektors mit der den Vorgaben entsprechenden Gründlichkeit durchgeführt werden, da aufgrund des weiterhin betriebenen Roboters ausreichend Zeit für die Reinigung zur Verfügung steht.

Gemäß einer weiteren Ausführungsform wird als Ersatzendeffektor ein zuvor gereinigter Endeffektor an die Kinematik angekoppelt. Zu diesem Zweck kann die Reinigungseinrichtung derart gestaltet sein, dass mehrere Endeffektoren darin Platz finden. Alternativ kann auch eine zweite Reinigungseinrichtung vorgesehen sein, aus welcher ein sauberer Ersatzendeffektor entnehmbar ist. In beiden Fällen entfällt eine aufwändige Bereitstellung von neuwertigen Ersatzendeffektoren. Es wird vielmehr lediglich ein Wechsel oder Austausch innerhalb eines ohnehin vorhandenen Satzes von Endeffektoren durchgeführt.

Vorteilhafterweise erfolgt sowohl das Abkoppeln des Endeffektors von der Kinematik als auch das Ankoppeln des Ersatzendeffektors an die Kinematik direkt in der Reinigungseinrichtung. Bei einer erforderlichen Reinigung wird also zunächst der verschmutzte Endeffektor in die Reinigungseinrichtung bewegt und dort von der Kinematik abgekoppelt. Die Kinematik, von welcher der verschmutzte Endeffektor abgekoppelt wurde, wird anschließend zu dem ebenfalls in der Reinigungseinrichtung oder in einer weiteren Reinigungseinrichtung befindlichen Ersatzendeffektor bewegt und automatisch an diesen angekoppelt.

Alternativ kann auch eine Koppelstation vorgesehen sein, in welcher ein verschmutzter Endeffektor abgelegt und ein sauberer Ersatzendeffektor bereitgestellt wird, wobei Endeffektor und Ersatzendeffektor zwischen der Koppelstation und wenigstens einer Reinigungseinrichtung hin und her transportierbar sind. Eine derartige Koppelstation stellt gewissermaßen eine Schnittstelle zwischen dem Roboter und der wenigstens einen Reinigungseinrichtung dar.

Gemäß einer weiteren Ausführungsform erfolgt die automatische Reinigung in vorbestimmten, insbesondere regelmäßigen, Zeitabständen. Eine sensorische Erfassung des Verschmutzungszustands des Endeffektors ist in diesem Fall nicht erforderlich. Die Steuerung von Roboter und Reinigungseinrichtung kann demgemäß besonders einfach ausgeführt sein.

Alternativ oder zusätzlich kann die automatische Reinigung auch nach einer vorbestimmten Anzahl von Umsetzvorgängen erfolgen. Hierbei wird die Tatsache berücksichtigt, dass Verschmutzungen oder Kontaminationen hauptsächlich während eines Umsetzvorgangs auftreten, sodass also durch die Anzahl der Umsetzvorgänge relativ zuverlässig auf den tatsächlichen Verunreinigungsgrad geschlossen werden kann. Die beiden Kriterien "Zeitabstand" und "Anzahl von Umsetzvorgängen" können auch in geeigneter Weise miteinander verknüpft werden. So kann also beispielsweise eine automatische Reinigung lediglich dann durchgeführt werden, wenn ein vorbestimmter Zeitabstand zum vorangegangenen Endeffektorwechsel vorliegt und zusätzlich eine vorbestimmte Anzahl von Umsetzvorgängen seit dem vorangegangenen Endeffektorwechsel erfolgt ist.

Alternativ oder zusätzlich kann der Verschmutzungs- oder Kontaminationsgrad des Endeffektors sensorisch erfasst werden, wobei eine Reinigung immer dann eingeleitet wird, wenn der erfasste Verschmutzungs- oder Kontaminationsgrad einen Schwellenwert überschreitet.

Die der Erfindung zugrunde liegende Aufgabe wird ferner durch eine Vorrichtung mit den Merkmalen des Anspruchs 9 gelöst. Die erfindungsgemäße Vorrichtung umfasst einen Roboter, welcher eine Kinematik und einen mit der Kinematik gekoppelten Endeffektor zum Umsetzen von Lebensmittelprodukten aufweist, und eine Reinigungseinrichtung zur automatischen Reinigung des Endeffektors bei Erfüllung eines Reinigungskriteriums. Mit Hilfe der erfindungsgemäßen Vorrichtung lässt sich das erfindungsgemäße Verfahren durchführen, so dass die voranstehend beschriebenen Vorteile entsprechend auch für die Vorrichtung gelten.

Gemäß einer Ausführungsform ist die Reinigungseinrichtung innerhalb des Aktionsbereichs des Roboters angeordnet. Auf diese Weise kann der Roboter seinen Endeffektor selbst direkt in die Reinigungseinrichtung einbringen. Alternativ ist auch eine innerhalb des Aktionsbereichs angeordnete Koppelstation vorstellbar, von wo aus ein von der Kinematik abgekoppelter, verschmutzter Endeffektor zu einer außerhalb des Aktionsbereichs befindlichen Reinigungseinrichtung gebracht werden kann.

Gemäß einer weiteren Ausführungsform ist ein sauberer Ersatzendeffektor in der Reinigungseinrichtung vorhanden, der anstelle des zu reinigenden Endeffektors an die Kinematik ankoppelbar ist. Der Ersatzendeffektor steht bevorzugt in unmittelbarer Umgebung des Abkoppelorts für den zu reinigenden Endeffektor zur Verfügung, wodurch die Verfahrwege der Roboterkinematik für einen vorzunehmenden Endeffektorwechsel minimiert sind.

Weitere vorteilhafte Ausbildungen der Erfindung sind den Unteransprüchen, der Beschreibung und der Zeichnung zu entnehmen.

Die Erfindung wird im Folgenden rein beispielhaft anhand einer möglichen Ausführungsform unter Bezugnahme auf die beigefügte Zeichnung beschrieben.

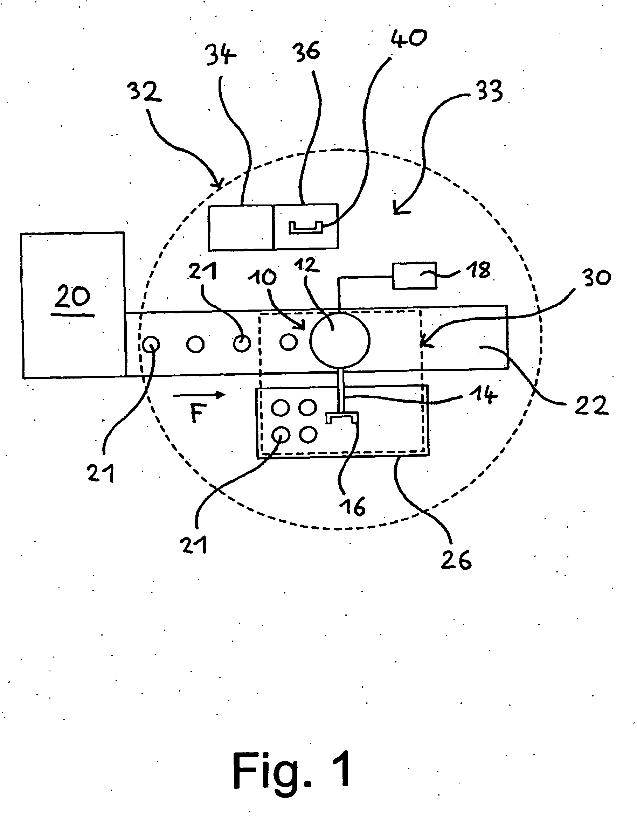

- Fig. 1: zeigt eine schematische Draufsicht auf eine erfindungsgemäße Vorrichtung zur Handhabung von Lebensmittelprodukten, welche einen Roboter zum Umsetzen der Lebensmittelprodukte umfasst.

Gemäß Fig. 1 umfasst ein Roboter 10 eine ortsfeste Basis 12, eine beweglich an dieser angebrachte Kinematik 14 sowie einen an die Kinematik 14 angekoppelten Endeffektor 16, z.B. einen Produktgreifer. Der Roboter 10, bei welchem es sich z.B. um einen Delta- oder Parallelroboter handeln kann, ist in einer Produktionslinie mit einer Schneidvorrichtung, hier einem Hochleistungs-Slicer 20, zum Aufschneiden von Lebensmittelprodukten und einer dem Slicer 20 nachgeordneten Verpackungsmaschine 26 für die Herstellung verkaufsfertiger Portionspackungen angeordnet.

Durch den Slicer 20 wird das aufzuschneidende Lebensmittelprodukt zunächst in Produktscheiben aufgeschnitten, wobei mehrere Produktscheiben jeweils eine Portion 21 des Lebensmittelprodukts bilden können. Die Portionen 21 werden mittels eines Bandförderers 22 entlang einer Förderrichtung F zu dem Roboter 10 transportiert, welcher die Portionen 21 mittels des Endeffektors 16 von dem Bandförderer 22 aufnimmt und an einem vorbestimmten Ablageort in der Verpackungsmaschine 26 ablegt.

Der Bereich, innerhalb welchem der Roboter 10 Portionen 21 aufnimmt und ablegt, definiert einen Arbeitsbereich 30 des Roboters 10. Der gesamte Aktionsbereich 32 des Roboters 10, also jener Bereich, der durch die Kinematik 14 bzw. den daran angekoppelten Endeffektor 16 grundsätzlich erreichbar ist, umfasst den Arbeitsbereich 30 und einen weiteren, während des normalen Umsetzbetriebs nicht genutzten Bereich 33.

In diesem nicht genutzten Bereich 33 sind eine erste Reinigungseinrichtung 34 sowie eine zweite Reinigungseinrichtung 36 vorgesehen. Bei den Reinigungseinrichtungen 34, 36 kann es sich um dem Fachmann geläufige Apparaturen wie Tauchbäder, Sprühvorrichtungen, Ultraschallgeräte oder dergleichen handeln. Mittels der Reinigungseinrichtungen 34, 36 wird der Endeffektor 16 des Roboters 10 in regelmäßigen Zeitabständen automatisch gereinigt, wie nachfolgend näher beschrieben wird.

Sobald eine dem Roboter 10 zugeordnete Steuereinrichtung 18 feststellt, dass ein vorbestimmtes Zeitintervall abgelaufen ist, löst sie eine automatische Reinigung des Endeffektors 16 aus. Zu diesem Zweck wird die Kinematik 14 des Roboters 10 aus dem Arbeitsbereich 30 heraus und zu der ersten Reinigungseinrichtung 34 hinbewegt. Sobald sich der Endeffektor 16 in der ersten Reinigungseinrichtung 34 befindet, wird er von der Kinematik 14 abgekoppelt. Anschließend wird die Kinematik 14 zu der zweiten Reinigungseinrichtung 36 hinbewegt, in welcher sich ein sauberer Ersatzendeffektor 40 befindet. Der Ersatzendeffektor 40 wird an die Kinematik 14 angekoppelt und mittels der Kinematik 14 in den Arbeitsbereich 30 bewegt, um das Umsetzen der Portionen 21 fortzusetzen. Bei dem Ersatzendeffektor 40 handelt es sich um einen Endeffektor, welcher dem zu reinigenden Endeffektor 16 gleichwertig ist und welcher z.B. zuvor in der zweiten Reinigungseinrichtung 36 gereinigt wurde.

Während der Roboter 10 mit dem Ersatzendeffektor 40 weiterarbeitet, wird der Endeffektor 16 in der ersten Reinigungseinrichtung 34 gereinigt. Die Portionen 21 werden also während der Reinigung des Endeffektors 16 weiter umgesetzt, sodass der Betrieb des Slicers 20 bzw. des Bandförderers 22 für die Reinigung zumindest nicht für lange unterbrochen werden muss. Für die Reinigung des Endeffektors 16 steht die Dauer bis zum nächsten Greiferwechsel zur Verfügung.

Nach erneutem Ablauf des vorbestimmten Zeitintervalls wird der Ersatzendeffektor 40 dann in der zweiten Reinigungseinrichtung 36 abgekoppelt und der ursprüngliche Endeffektor 16 wieder an die Kinematik 14 angekoppelt und aus der ersten Reinigungseinrichtung 34 entnommen.

Auf diese Weise werden die Endeffektor 16, 40 also in regelmäßigen Zeitabständen gegeneinander ausgetauscht, sodass jeweils einer der Endeffektor 16, 40 in einer der Reinigungseinrichtungen 34, 36 und der jeweils andere Endeffektor 40, 16 an die Kinematik 14 des Roboters 10 angekoppelt und im Einsatz ist.

Durch den regelmäßig erfolgenden Endeffektorwechsel in Verbindung mit einem jeweiligen Reinigungsvorgang ist sichergestellt, dass der Roboter 10 stets die vorgeschriebenen Hygieneanforderungen erfüllt. Ein Bediener der Anlage muss sich daher nicht weiter darum kümmern, wann und in welchem Umfang eine Reinigung des Endeffektors 16 vorzunehmen ist.

### Bezugszeichenliste

- 10: Roboter
- 12: Basis
- 14: Kinematik
- 16: Endeffektor
- 18: Steuereinrichtung
- 20: Slicer
- 21: Portion
- 22: Bandförderer
- 26: Verpackungsmaschine
- 30: Arbeitsbereich
- 32: Aktionsbereich
- 33: nicht genutzter Bereich
- 34: erste Reinigungseinrichtung
- 36: zweite Reinigungseinrichtung
- 40: Ersatzendeffektor
- F: Förderrichtung

## Patentansprüche

1. Verfahren zum Betreiben eines Roboters (10), welcher eine Kinematik (14) und einen mit der Kinematik (14) gekoppelten Endeffektor (16) zum Umsetzen von Lebensmittelprodukten (21), umfasst,
**dadurch gekennzeichnet, dass**
der Endeffektor (16) bei Erfüllung eines Reinigungskriteriums automatisch gereinigt wird.

2. Verfahren nach Anspruch 1,
**dadurch gekennzeichnet, dass**
der zu reinigende Endeffektor (16) automatisch in den Wirkbereich einer Reinigungseinrichtung (34) bewegt und durch diese gereinigt wird.

3. Verfahren nach Anspruch 1 oder 2,
**dadurch gekennzeichnet, dass**
der zu reinigende Endeffektor (16) vor seiner Reinigung von der Kinematik (14) abgekoppelt wird.

4. Verfahren nach Anspruch 3,
**dadurch gekennzeichnet, dass**
nach der Abkopplung des zu reinigenden Endeffektors (16) ein Ersatzendeffektor (40) an die Kinematik (14) angekoppelt wird und das Umsetzen von Lebensmittelprodukten (21) während der Reinigung fortgesetzt wird.

5. Verfahren nach Anspruch 4,
**dadurch gekennzeichnet, dass**
als Ersatzendeffektor (40) ein zuvor gereinigter Endeffektor an die Kinematik (14) angekoppelt wird.

6. Verfahren nach Anspruch 4 oder 5,
**dadurch gekennzeichnet, dass**
das Abkoppeln des Endeffektors (16) von der Kinematik (14) bzw. das Ankoppeln des Ersatzendeffektors (40) an die Kinematik (14) in der Reinigungseinrichtung (34, 36) erfolgt.

7. Verfahren nach zumindest einem der vorstehenden Ansprüche,
**dadurch gekennzeichnet, dass**
die automatische Reinigung in vorbestimmten, insbesondere regelmäßigen, Zeitabständen erfolgt.

8. Verfahren nach zumindest einem der vorstehenden Ansprüche,
**dadurch gekennzeichnet, dass**
die automatische Reinigung nach einer vorbestimmten Anzahl von Umsetzvorgängen erfolgt.

9. Vorrichtung, insbesondere zur Durchführung des Verfahrens nach einem der vorherigen Ansprüche, mit einem Roboter (10), welcher eine Kinematik (14) und einen mit der Kinematik (14) gekoppelten Endeffektor (16) zum Umsetzen von Lebensmittelprodukten (21) umfasst, **gekennzeichnet durch** eine Reinigungseinrichtung (34) zur automatischen Reinigung des Endeffektors (16) bei Erfüllung eines Reinigungskriteriums.

10. Vorrichtung nach Anspruch 9,
**dadurch gekennzeichnet, dass**
die Reinigungseinrichtung (34) innerhalb eines Aktionsbereichs (32) des Roboters (10) angeordnet ist.

11. Vorrichtung nach Anspruch 9 oder 10,
**dadurch gekennzeichnet, dass**
ein sauberer Ersatzendeffektor (40) in der Reinigungseinrichtung (36) vorhanden ist, der anstelle des zu reinigenden Endeffektors (16) an die Kinematik (14) ankoppelbar ist.

## Claims

1. A method of operating a robot (10) which comprises a kinematic mechanism (14) and an end effector (16) coupled to the kinematic mechanism (14) for transferring food products (21),
**characterized in that**
the end effector (16) is automatically cleaned on the satisfaction of a cleaning criterion.

2. A method in accordance with claim 1,
**characterized in that**
the end effector (16) to be cleaned is automatically moved into the region of action of a cleaning device (34) and is cleaned by it.

3. A method in accordance with claim 1 or claim 2,
**characterized in that**
the end effector (16) to be cleaned is decoupled from the kinematic mechanism (14) before its cleaning.

4. A method in accordance with claim 3,
**characterized in that**
a replacement end effector (40) is coupled to the kinematic mechanism (14) after the decoupling of the end effector (16) to be cleaned and the transfer of products (21) is continued during the cleaning.

5. A method in accordance with claim 4,
**characterized in that**
a previously cleaned end effector is coupled to the kinematic mechanism (14) as the replacement end effector (40)

6. A method in accordance with claim 4 or claim 5,
**characterized in that**
the decoupling of the end effector (16) from the kinematic mechanism (14) or the coupling of the replacement end effector (40) to the kinematic mechanism (14) takes place in the cleaning device (34, 36).

7. A method in accordance with at least one of the preceding claims,
**characterized in that**
the automatic cleaning takes place at predetermined, in particular regular, time intervals.

8. A method in accordance with at least one of the preceding claims,
**characterized in that**
the automatic cleaning takes place after a predetermined number of transfer procedures.

9. An apparatus, in particular for carrying out the method in accordance with any one of the preceding claims, having a robot (10) which comprises a kinematic mechanism (14) and an end effector (16) coupled to the kinematic mechanism (14) for transferring food products (21), **characterized by** a cleaning device (34) for the automatic cleaning of the end effector (16) on the satisfaction of a cleaning criterion.

10. An apparatus in accordance with claim 9,
**characterized in that**
the cleaning device (34) is arranged within a region of action (32) of the robot (10).

11. An apparatus in accordance with claim 9 or claim 10,
**characterized in that**
a clean replacement end effector (40) is present in the cleaning device (36) which can be coupled to the kinematic mechanism (14) instead of the end effector (16) to be cleaned.

## Revendications

1. Procédé pour le fonctionnement d'un robot (10), qui comprend un système cinématique (14) et un effecteur terminal (16), couplé au système cinématique (14), pour manipuler des produits alimentaires (21),
**caractérisé en ce que**
l'effecteur terminal (16) est automatiquement nettoyé lorsqu'un critère de nettoyage est satisfait.

2. Procédé selon la revendication 1,
**caractérisé en ce que** l'effecteur terminal (16) à nettoyer est déplacé automatiquement jusque dans la zone d'action d'un dispositif de nettoyage (34) et est nettoyé par celui-ci.

3. Procédé selon la revendication 1 ou 2,
caractérisé entre ce que l'effecteur terminal à nettoyer (16) est découplé du système cinématique (14) avant son nettoyage.

4. Procédé selon la revendication 3,
**caractérisé en ce que**, après découplage de l'effecteur terminal (16) à nettoyer, on couple un effecteur terminal de remplacement (40) au système cinématique (14), et l'on continue la manipulation de produits alimentaires (21) pendant le nettoyage.

5. Procédé selon la revendication 4,
**caractérisé en ce que** l'on couple au système cinématique (14) un effecteur terminal précédemment nettoyé à titre d'effecteur terminal de remplacement (40).

6. Procédé selon la revendication 4 ou 5,
**caractérisé en ce que** le découplage de l'effecteur terminal (16) depuis le système cinématique (14) ou respectivement le couplage de l'effecteur terminal de remplacement (40) au système cinématique (14) a lieu dans le dispositif de nettoyage (34, 36).

7. Procédé selon l'une au moins des revendications précédentes,
**caractérisé en ce que** le nettoyage automatique a lieu à intervalles temporels prédéterminés, en particulier réguliers.

8. Procédé selon l'une au moins des revendications précédentes,
**caractérisé en ce que** le nettoyage automatique a lieu après un nombre prédéterminé d'opérations de manipulation.

9. Appareil, en particulier pour la mise en oeuvre du procédé selon l'une des revendications précédentes, comprenant un robot (10), qui comprend un système cinématique (14) et un effecteur terminal (16) couplé au système cinématique (14) pour manipuler des produits alimentaires (21),
**caractérisé en ce qu'**il comprend un dispositif de nettoyage (34) pour le nettoyage automatique de l'effecteur terminal (16) lorsqu'un critère de nettoyage est satisfait.

10. Appareil selon la revendication 9,
**caractérisé en ce que** le dispositif de nettoyage (34) est agencé à l'intérieur d'une zone d'action (32) du robot (10).

11. Appareil selon la revendication 9 ou 10,
**caractérisé en ce qu'**il est prévu un effecteur terminal de remplacement propre (40) dans le dispositif de nettoyage (36), qui peut être couplé au système cinématique (14) à la place de l'effecteur terminal (16) à nettoyer.
